# EUROPÄISCHE PATENTSCHRIFT

(11) **EP 0 598 314 B1**
(45) Veröffentlichungstag und Bekanntmachung des Hinweises auf die Patenterteilung: **20.06.2001**
(21) Anmeldenummer: 93118154.9
(22) Anmeldetag: 09.11.1993
(51) Int. Cl.: B32B 5/16, B32B 7/04

(54) **Polster- und/oder Isolierkörper**
Cushioned and/or insulating body
Corps de rembourrage et/ou isolant

(30) Priorität: 09.11.1992 DE 4237728
(43) Veröffentlichungstag der Anmeldung: 25.05.1994
(73) Patentinhaber: TESCH, Günter, CH-1700 Fribourg (CH)
(72) Erfinder: TESCH, Günter, CH-1700 Fribourg (CH)
(74) Vertreter: Lesser, Karl-Bolko, Dipl.-Ing.

(56) Entgegenhaltungen:
- WO-A-86/07011
- DE-A- 2 054 199
- DE-A- 2 136 444
- DE-A- 2 806 264
- US-A- 4 304 824

## Beschreibung

Die Erfindung betrifft einen Polster- und / oder Isolierkörper, gemäß dem Oberbegriff des Hauptanspruches.

Aus der EP 0 228 393 ist ein Isolierkörper bekannt, der zwei mindestens teilflächig miteinander verbundene Außenschichten aufweist, zwischen denen eine Fasern enthaltende Zwischenschicht angeordnet ist. Die beiden Außenschichten sind an Verbindungsstellen teilflächig miteinander verbunden. Die im Bereich der Verbindungsstellen liegenden Fasern werden durch Hitzeeinwirkung (Schweißen) aufgeschmolzen, so daß luftdichte, Fasern enthaltende Kammern entstehen. Diese einzelnen, abgeschlossenen Faserkammern sind notwendig, weil die Fasern innerhalb des Körpers positioniert und dadurch gleichmäßig verteilt werden.

In der DE GM 79 14 659 ist eine Polsterfolie beschrieben. Die Polsterwirkung beruht darauf, daß zwischen zwei Folienbahnen, von denen die eine Bahn noppenartige Vertiefungen aufweist, Luft eingeschlossen ist. Die Herstellung von solchen noppenartigen Vertiefungen, gleich welcher Form , erfolgt durch Tiefziehen der Folien und ist aufwendig.

Aus der DE AS 21 56 267 ist eine Luftpolsterfolie bekannt, welche mit napfförmigen Vertiefungen versehen ist und zur Polsterung, insbesondere von Versandtaschen verwendet wird. Derartige Luftpolsterfolien sind aufgrund des komplizierten Herstellungsverfahrens teuer und deren Anwendungsbereich deshalb eingeschränkt.

Daneben ist aus der DE OS 21 36 444 ein Formkörper aus Kunststoff bekannt, bei dem stückiges Kunststoffmaterial, welches gegebenenfalls zwischen zwei Bahnen angeordnet sein kann, vorliegt. Das stückige Kunststoffmaterial ist mit den beiden Bahnen durch Druck- und Temperatureinwirkung verbunden. Der Einsatz des beschriebenen Formkörpers als Isolierkörper ist nur sehr eingeschränkt möglich, da dieser Körper in Form einer großflächigen Bahn vorliegt und dadurch keine ausreichende Flexibilität aufweist.

Aus der DE-A-2 054 199 ist ein Polsterkörper gemäß dem Oberbegriff des Hauptanspruchs der vorliegenden Anmeldung bekannt.

Der Erfindung liegt die Aufgabe zugrunde, einen Polster- und / oder Isolierkörper anzugeben, welcher die o.g. Nachteile nicht aufweist, preisgünstig und technisch einfach herstellbar ist, sowie die Verarbeitung von Kunststoffabfällen z.B. aus Polyethylenverpackungsfolien erlaubt.

Diese Aufgabe wird durch den Gegenstand des Anspruchs 1 gelöst. Ein Verfahren zur Herstellung des erfindungsgemäßen Gegenstandes gibt Anspruch 12 an. Die Unteransprüche stellen vorteilhafte Weiterbildungen dar.

Der erfindungsgemäße Polster- und / oder Isolierkörper weist zwischen zwei Außenschichten angeordnetes, aus stückigem thermoplastischen Kunststoff bestehendes Füllmaterial, wobei die beiden Außenschichten teilflächig durch Wärme- und Druckeinwirkung fest miteinander verbunden sind. Die Verbindung der beiden Außenschichten erfolgt vorteilhafterweise durch von oben aufgebrachte Abschweißungen. Dadurch entstehen vorzugsweise streifenförmige Verbindungsbereiche, die oft vorteilhafterweise über den gesamten Körper verteilt vorliegen. Verlaufen die Verbindungsbereiche als parallel zueinander liegende Streifen, so ist der gesamte so hergestellte Körper viel biegsamer als vergleichbare gattungsgemäße Isolierkörper. Durch eine entsprechende Anordnung der Verbindungsbereiche kann das elastische Verhalten des gesamten Körpers sehr einfach beeinflußt werden und den Anforderungen an das fertige Produkt angepaßt werden. Sind die Verbindungsbereiche z.B. im Schachbrettmuster angeordnet, stehen die Abschweißlinien senkrecht aufeinander, so sind solche Körper besonders gut in zwei Richtungen rollbar und auch bogenförmig verwendbar. Ähnliches gilt für Körper mit abgeschweißtem Karo-Muster. Die Abschweißungslinien können auch sehr eng zueinander angeordnet verlaufen, z.B. in einem Abstand von 1 bis 2 cm und darunter, wodurch steife Körper (Matten) entstehen. Die Verbindungsbereiche zwischen den Außenschichten können nicht nur streifenförmig, sie können auch punkt- oder strichförmig ausgebildet sein. Verlaufen die Verbindungsbereiche streifenförmig, so ist das Zerkleinern eines bahnförmigen Körpers besonders einfach; ein derartiger Körper braucht nur längs der als Streifen ausgebildeten Verbindungsbereiche aufgeschnitten oder aufgetrennt zu werden. Die Verbindungsbereiche können auch ein bestimmtes Muster bildend angeordnet sein. Für diesen Fall reicht es, die einzelnen Körper längs der Verbindungsbereiche aufzutrennen bzw. abzutrennen, um unterschiedliche Körperformen, auch z.B. hanze Slogans oder Sätze oder auch einzelne Buchstaben zu erhalten. Die einzelnen Körper können auch mit Schriftsätzen oder Werbeslogans bedruckt sein. Das Füllmaterial rieselt dabei nicht heraus, so daß anwendungsabhängig beliebig große Polster- und / oder Isolierkörper auf eine besonders einfache Art und Weise erhalten werden können. Die Verbindung der beiden Außenschichten miteinander erfolgt durch Druck- und Temperatureinwirkung. Bestehen die beiden Außenschichten aus einem thermoplastischen Kunststoffmaterial, z.B. einer Polyethylenfolie, so werden diese beiden Folien im Verbindungsbereich einer Temperatureinwirkung, die der Schmelztemperatur der Folien entspricht ausgesetzt und unter Druck verbunden. Auch die Verbindung von Außenschichten, die aus anderen Materialien bestehen, z.B. aus Vliesstoff oder Papier, ist durch das Vorhandensein des Füllmaterials, welches aus stückigem thermoplastischen Kunststoff besteht, unproblematisch. Durch Temperatur- einwirkung werden die zwischen den beiden Außenschichten liegenden Kunststoffstücke geschmolzen und unter Druckeinfluß miteinander und mit den beiden Außenschichten verbunden. Somit ist eine preisgünstige und technisch besonders einfache Herstellung von Polster- und / oder Isolierkörpern mit unterschiedlichen Materialien möglich. Das ohnehin vorhandene Füllmaterial dient als Bindemittel zwischen den beiden Außenschichten. Der Zusatz von weiteren Klebe- oder Bindemitteln erübrigt sich. Das stückige Kunststoffmaterial, das in Form von Streifen vorliegt, z.B. mit einer Länge von 5 bis 15 cm und einer Breite von ca. 2 mm, wird nicht nur im Bereich der Verbindungsbereiche durch Einfluß von Druck und Temperatur fixiert. Seine Positionierung im gesamten Körper ist ebenfalls konstant.

In einer vorteilhaften Ausgestaltung sieht die Erfindung vor, daß die Verbindung zwischen den Außenschichten und dem stückigen Kunststoffüllmaterial durch Wärmeeinwirkung nicht nur in den Verbindungsbereichen zwischen den beiden Außenschichten erfolgt, sondern die Fläche des gesamten Körpers umfaßt. Dabei können entweder die Außenschichten (wenn sie aus thermoplastischem Material bestehen) auf eine Temperatur, die etwa ihrer Schmelztemperatur entspricht, aber diese noch nicht erreicht, erwärmt werden und mit dem zwischen ihnen befindlichen Kunststoffmaterial verbunden werden, oder der stückige, thermoplastische Kunststoff wird auf eine etwa im Bereich seines Schmelzpunktes liegende Temperatur gebracht und mit den beiden nicht erwärmten Außenschichten durch leichten Druck verbunden. Dabei ist es möglich, durch entsprechende Einwirkung von Temperatur und Druck Körper herzustellen, die eine unterschiedliche Struktur aufweisen. Durch Anwendung von höherem Druck und höherer Temperatur ist eine feste Struktur erreichbar, da dadurch das gesamte Füllmaterial fester miteinander verbunden wird. Bei niedrigerem Druck kann das Füllmaterial z.B. nur in den Berührungsbereichen mit den Außenschichten mit diesen und untereinander fest verbunden vorliegen; in den übrigen Bereichen kann die Struktur des Füllmaterials locker bleiben, d.h. die einzelnen Kunststoffstücke lose in dieser festen Struktur vorliegen. Der Körper kann also entsprechend dem Verwendungszweck, z.B. als feste, dünnere Briefumschlageinlage, oder dickere, lockerere Isoliermatte gestaltet werden.

Durch die Anordnung des stückigen Kunststoffmaterials zwischen den beiden Außenschichten sind diese voneinander beabstandet; durch die feste Verbindung zwischen den Außenschichten und dem Füllmaterial ist erreicht, daß das Gebilde eine konstante oder wahlweise unterschiedliche Dicke aufweisen kann und keine zusätzlichen, abgeschlossenen Kammern notwendig sind, um das Füllmaterial gleichmäßig zu verteilen und zu positionieren.

Für manche Anwendungen, z.B. Luftzirkulation, ist es vorteilhaft, wenn der Körper in Verbindungsbereichen mit Durchbrechungen versehen ist. Sie können verschiedene Formen aufweisen, z.B. Punkt- oder Schlitzform. Die Durchbrechungen in Verbindungsbereichen können gleichzeitig mit dem Verbindungsvorgang der Außenschichten eingebracht werden. Für diesen Fall ist es ausreichend, daß z.B. der Schweißbalken mit entsprechenden Trennwerkzeugen versehen ist.

Besonders vorteilhaft ist, wenn die Abmessungen des stückigen Kunststoffmaterials zwischen 2 und 15mm in der Länge und 2 und 10mm in der Breite betragen. Die erfindungsgemäßen Flächengebilde können vorzugsweise Dicken zwischen 2mm und 2cm aufweisen. Größere Dicken sind möglich. Darüberhinaus kann die Dicke und die Elastizität des herzustellenden Flächengebildes durch die Art der Füllung beeinflußt werden. Ist die Füllung des Flächengebildes sehr locker, d.h. der Abstand zwischen den einzelnen Kunsttoffstücken relativ groß, so ist es elastischer, ist die Füllung sehr dicht, d.h. befinden sich die Kunststoffstücke dicht nebendinander, so ist das Gebilde steifer. Während des Herstellungsprozesses kann bei einer lockeren Füllung ein geringerer Druck verwendet werden als bei einer dichten Füllung. Zur Herstellung von dünnen Gebilden ist eine lockere Füllung geeignet, weil die Kunststoffstücke bereits bei einem geringen Druck weitgehend zusammengedrückt werden können. Liegt das stückige Kunststoffmaterial volumenvergrößert, d.h. dreidimensional verformt vor, wird erreicht, daß die Dicke des Gebildes während des Herstellungsprozesses einfach variiert werden kann, und daß die Polsterwirkung eines derartigen Flächengebildes durch die dem dreidimensional verformten stückigen Kunststoffmaterial innewohnende hohe Elastizität besonders gut ist. Das folienartige Kunststoffüllmaterial kann bis zu 10-20% (manchmal sogar mehr) mit diesem uneinheitliches Material enthalten, so z.B. Hochdruck-Polyethylen, Papier, PVC oder einfache Verunreinigungen.

Für manche Anwendungen ist es vorteilhaft, wenn die an die Verbindungsbereiche angrenzenden Bereiche des Körpers Versteifungen aufweisen. Diese können z.B. aus Strohzweigteilen oder Spänen bzw. Streifen von härteren Kunststoffen bestehen. Sie können während der Herstellung des Körpers eingelegt werden oder nachträglich in diesen eingeschoben werden. Die Versteifungen haben den Vorteil, daß dem Körper eine dauerhaft räumliche Form gegeben werden kann.

Die Außenschichten können gefärbt sein, um ein gefälliges Äußeres des Körpers zu erreichen. Außerdem können die Außenschichten, wenn sie aus thermoplastischem Kunststoff bestehen, auch z.B. durch Wärme klebrig gemacht werden und voll- oder teilflächig mit anderen (auch ähnlichen) Gebilden, insbesondere platten, glatten Flächen oder Stücken, verbunden werden. Die Bahnen können auch zu Kartons verarbeitet werden und mit Papieraußenschichten versehen werden.

Ein Verfahren zur Herstellung des erfindungsgemäßen Körpers ist dadurch gekennzeichnet, daß zwischen zwei Außenschichten thermoplastisches, stückiges Kunststoffmaterial eingebracht wird und die beiden Außenschichten miteinander verbunden werden. Im einzelnen wird das Verfahren so durchgeführt, daß auf eine untere Außenschicht stückiges thermoplastisches Kunststoffmaterial abgelegt und durch eine obere Außenschicht abgedeckt wird. Das Einbringen von Verbindungsbereichen in den Körper geschieht durch Abschweißungen von außen. Für den Fall daß die beiden Außenschichten aus thermoplastischem Kunststoff bestehen, werden sie miteinander verschweißt. Befindet sich in diesem Bereich das stückige Kunststoffüllmaterial, so wird es mit den beiden Außenschichten ebenfalls verschweißt. Bestehen die Außenschichten aus unterschiedlichen Materialien, z.B. Vliesstoff oder Papier, so werden sie unter Einwirkung von Druck und Temperatur durch das geschmolzene thermoplastische Kunststoffüllmaterial fest miteinander verbunden.

In Ausgestaltung sieht die Erfindung vor, daß die Außenschichten und das Kunststoffüllmaterial auch außerhalb der Verbindungsbereiche miteinander teilweise verbunden vorliegen. Für diesen Fall werden entweder die aus thermoplastischem Kunststoff bestehenden Außenschichten und / oder das stückige Kunststoffüllmaterial auf eine Temperatur erwärmt, die etwa im Bereich der Schmelztemperatur des Kunststoffes liegt und unter Druckeinfluß miteinander verbunden, bei gleichzeitigem oder darauf folgendem Einbringen von Abschweißungen zur Verbindung der beiden Außenschichte miteinander. Für den Fall, daß die Außenschichten z.B. aus Papier oder Vliesstoff bestehen, wird das stückige Kunststoffüllmaterial (gegebenenfalls von außen(!))soweit erwärmt werden, daß es heißklebrig ist und die beiden äußeren Schichten miteinander verbindet. Dabei ist es nicht immer notwendig das gesamte Füllmaterial zu erwärmen, es reicht manchmal, wenn nur der außenschichtnahe Bereich erwärmt wird und das übrige Füllmaterial locker dadurch gehalten wird. Manchmal muß das Verfahren in zwei Schritten durchgeführt werden, insbesondere dann, wenn nur eine Außenschicht aus Papier oder Vliesstoff besteht. In diesem Falle wird das Kunststoffüllmaterial auf eine erwärmte thermoplastische Außenschicht abgelegt, mit dieser verbunden, danach erwärmt und heißklebrig gemacht, z.B. durch Anwendung von Heißluftstößen, und anschließend durch Druck mit der zweiten z.B. aus Papier bestehenden, oberen Außenschicht verbunden. Das Füllmaterial kann aber auch nach dem Ablegen der Außenschicht z.B. durch Strahlung erwärmt werden, wodurch das Verfahren weiter vereinfacht werden kann.

Weitere Einzelheiten der Erfindung ergeben sich aus im Folgenden anhand der Zeichnung beschriebenem Ausführungsbeispiel. Es zeit:
- Fig.1: Eine Ausführungsform des erfindungsgemäßen Körpers mit eingeschweißten Kammern.
- Fig.2: Eine schematische Darstellung eines anderen Musters des Körpers.
- Fig.3: Darstellung unterschiedlicher Formen der Polster und/oder Isolierkörper.

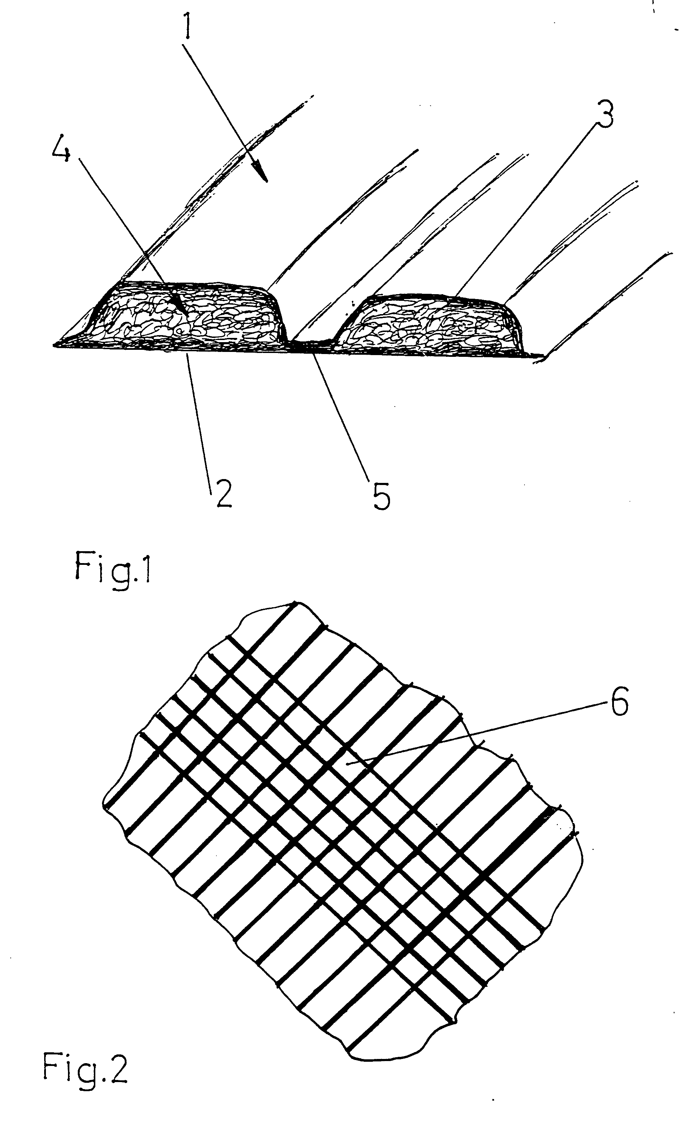

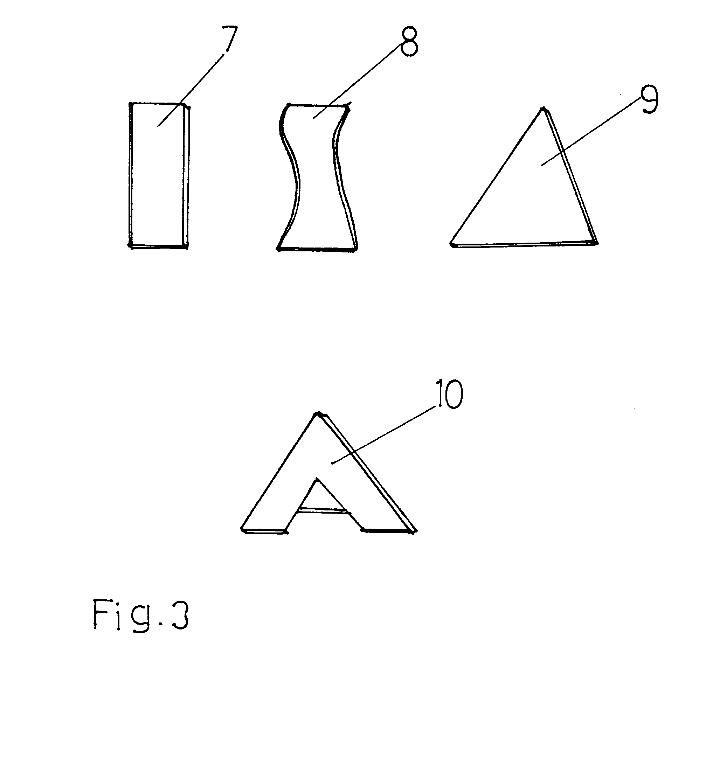

Der erfindungsgemäße Körper besteht aus einer oberen Außenschicht 1 und einer unteren Außenschicht 2 zwischen denen stückiges thermoplastisches Kunststoffmaterial 3 angeordnet ist. Das Füllmaterial 3 ist mit der oberen und der unteren Außenschicht 1,2 durch Schmelzvorgänge im Berührungsbereich des Füllmaterials 3 mit der Außenschicht verbunden. Außerhalb des Berührungsbereiches mit den Außenschichten 1,2 ist das Füllmaterial 3 locker angeordnet, wodurch eine besonders elastische und bewegliche Struktur des Körpers erreicht ist. Der Polster- und / oder Isolierkörper weist längliche Kammern 4 auf. Die Kammern 4 entstehen durch Schaffen von Verbindungsbereichen 5, vorzugsweise durch Einbringen von senkrechten Abschweißungen. Die dadurch entstehenden Schweißnähte 5 erstrecken sich z.B. parallel zu den Bahnrändern, oder sie sind in einem bestimmten Muster angeordnet (Fig.2). Der in Fig. 1 dargestellte Körper hat eine außen wellpappenähnliche Struktur, der in Fig.2 dargestellte Körper weist eine Karo-Muster-Struktur 6 auf. Diese Strukturen können auch z.B. durch eine weitere Lage aus einem dünnen Material abgedeckt werden, wodurch die Isolierwirkung derartiger Körper noch weiter gesteigert wird und diese zwei glatte Oberflächen aufweisen. Gemäß Fig.3 können die einzelnen Körper 7,8,9,10 unterschiedliche Formen aufweisen, so z.B. Buchstabenform oder ähnliches. Bei diesen Körpern 7,8,9,10 sind dann allseitig die Außenschichten (1,2) miteinander verbunden.

## Patentansprüche

1. Polster- und / oder Isolierkörper mit zwei mindestens teilweise voneinander beabstandeten Außenschichten (1, 2), wobei zwischen den beiden Außenschichten (1, 2) Füllmaterial (3) aus stückigem, thermoplastischen Kunststoffmaterial angeordnet ist und mindestens die beiden Außenschichten (1, 2) teilflächig durch Wärme- und Druckeinwirkung fest miteinander verbunden sind, dadurch gekennzeichnet, daß das stückige thermoplastische Füllmaterial (3) aus streifenförmigem Verpackungsfolien-Abfall besteht.

2. Polster- und / oder Isolierkörper nach Anspruch 1, dadurch gekennzeichnet, daß das stückige thermoplastische Füllmaterial im Verbindungsbereich der beiden Außenschichten (1,2) mit diesen und untereinander fest verbunden ist.

3. Polster- und / oder Isolierkörper nach Anspruch 1 oder 2, dadurch gekennzeichnet, daß das stückige thermoplastische Füllmaterial mindestens teilweise geschmolzen vorliegt.

4. Polster- und / oder Isolierkörper nach einem der Ansprüche 1 bis 3, dadurch gekennzeichnet, daß die Verbindungsbereiche der beiden Außenschichten (1, 2) streifenförmig ausgebildet sind.

5. Polster- und / oder Isolierkörper nach Anspruch 4, dadurch gekennzeichnet, daß der Körper durch die Verbindungsbereiche (5) in einzelne Kammern (4) unterteilt ist.

6. Polster- und / oder Isolierkörper nach Anspruch 4, dadurch gekennzeichnet, daß die Verbindungsbereiche (5) als Schweißbereiche ausgebildet sind.

7. Polster- und / oder Isolierkörper nach einem der vorhergehenden Ansprüche, dadurch gekennzeichnet, daß in den Verbindungsbereichen diese durchdringende Durchbrechungen angeordnet sind.

8. Polster- und / oder Isolierkörper nach einem der vorhergehenden Ansprüche, dadurch gekennzeichnet, daß die Außenschichten aus thermoplastischen Kunststoffmaterial oder aus Papier oder aus Vliesstoff bestehen.

9. Polster- und / oder Isolierkörper nach einem der vorhergehenden Ansprüche, dadurch gekennzeichnet, daß die Größe der Stücke des Füllmaterials (3) zwischen 2 bis 15 cm in der Länge und 2 bis 10 mm in der Breite beträgt.

10. Polster- und / oder Isolierkörper nach einem der vorhergehenden Ansprüche, dadurch gekennzeichnet, daß in der unmittelbaren Umgebung der Verbindungsbereiche (5) in deren Erstreckungsrichtung Versteifungen wie z.B. Strohzweigteile oder Späne / Streifen von härteren Kunststoffen eingelegt sind.

11. Polster- und / oder Isolierkörper nach einem der vorhergehenden Ansprüche, dadurch gekennzeichnet, daß die Verbindungsbereiche (5) so angeordnet sind, daß sie ein bestimmtes Muster ergeben und daß längs der Verbindungsbereiche (5) Körper (7, 8, 9, 10) abtrennbar sind, deren Außenschichten (1, 2) allseitig an den Begrenzungsrändern miteinander verbunden sind.

12. Verfahren zur Herstellung eines Polster- und / oder Isolierkörpers nach einem der vorhergehenden Ansprüche, dadurch gekennzeichnet, daß zwischen zwei Außenschichten (1, 2) stückiges thermoplastisches Füllmaterial (3) aus streifenförmigem Verpackungsfolien-Abfall eingebracht wird und die beiden Außenschichten (1, 2) durch von außen aufgebrachte Abschweißungen miteinander verbunden werden.

13. Verfahren nach Anspruch 12, dadurch gekennzeichnet, daß das im Verbindungsbereich (5) befindliche stückige Füllmaterial (3) untereinander und mit den beiden Außenschichten (1, 2) durch Abschweißungen verbunden wird.

## Claims

1. Cushioning and / or insulating body having two outer layers (1, 2) at least partially spaced apart from each other, with filling material (3) of thermoplastic material in piece form being arranged between the two outer layers (1,2) and at least the two outer layers (1, 2) being solidly bonded to one another over part of their surface area by the effect of heat and pressure, characterized in that the thermoplastic filling material (3) in piece form comprises packaging film waste in strip form.

2. Cushioning and / or insulating body according to Claim 1, characterized in that the thermoplastic filling material in piece form is solidly bonded to the two outer layers (1,2) in their joining region and to itself.

3. Cushioning and / or insulating body according to Claim 1 or 2, characterized in that the thermoplastic filling material in piece form is in an at least partially molten state.

4. Cushioning and / or insulating body according to one of Claims 1 to 3, characterized in that the joining regions of the two outer layers (1, 2) are of a strip-form design.

5. Cushioning and / or insulating body according to Claim 4, characterized in that the body is subdivided by the joining regions (5) into individual chambers (4).

6. Cushioning and / or insulating body according to Claim 4, characterized in that the joining regions (5) are designed as welding regions.

7. Cushioning and / or insulating body according to one of the preceding claims, characterized in that apertures penetrating the joining regions are arranged in the said regions.

8. Cushioning and / or insulating body according to one of the preceding claims, characterized in that the outer layers of thermoplastic material consist of paper or of nonwoven fabric.

9. Cushioning and / or insulating body according to one of the preceding claims, characterized in that the size of the pieces of the filling material (3) is between 2 and 15 cm in length and 2 and 10 mm in width.

10. Cushioning and / or insulating body according to one of the preceding claims, characterized in that stiffening means, such as for example parts of straw branches or chips/strips of harder plastics, are incorporated in the direct vicinity of the joining regions (5), in the direction of their extent.

11. Cushioning and / or insulating body according to one of the preceding claims, characterized in that the joining regions (5) are arranged in such a way that they produce a certain pattern and in that bodies (7, 8, 9, 10) of which the outer layers (1, 2) are bonded to one another on all sides at the bounding edges are able to be detached along the joining regions (5).

12. Process for producing a cushioning and / or insulating body according to one of the preceding claims, characterized in that thermoplastic filling material (3) in piece form comprising packaging film waste in strip form is introduced between two outer layers (1,2) and the two outer layers (1,2) are bonded to one another by welds applied from the outside.

13. Process according to Claim 12, characterized in that the filling material (3) in piece form located in the joining region (5) is bonded together and to the two outer layers (1, 2) by welds.

## Revendications

1. Corps de rembourrage et / ou d'isolation, ayant deux couches externes (1, 2), au moins partiellement écartées l'une de l'autre, un matériau de remplissage (3), fait en matériau synthétique thermoplastique sous forme de morceaux, étant disposé entre les deux couches externes (1, 2), et les deux couches externes (1, 2) au moins étant reliées ensemble de manière fixe sur une partie de leur surface par l'action de la chaleur et de la pression, caractérisé en ce que le matériau de remplissage thermoplastique sous forme de morceaux (3) se compose d'un déchet de feuilles d'emballage en forme de rubans.

2. Corps de rembourrage et / ou d'isolation selon la revendication 1, caractérisé en ce que le matériau de remplissage thermoplastique sous forme de morceaux est relié réciproquement de manière fixe, dans la zone de liaison des deux couches externes (1, 2), avec celles-ci.

3. Corps de rembourrage et / ou d'isolation selon la revendication 1 ou 2, caractérisé en ce que le matériau de remplissage thermoplastique sous forme de morceaux a été au moins partiellement fondu.

4. Corps de rembourrage et / ou d'isolation selon l'une des revendications 1 à 3, caractérisé en ce que les zones de liaison des deux couches externes (1, 2) sont configurées sous forme de rubans.

5. Corps de rembourrage et / ou d'isolation selon la revendication 4, caractérisé en ce que le corps est subdivisé par les zones de liaison (5) en chambres individuelles (4).

6. Corps de rembourrage et/ou d'isolation selon la revendication 4, caractérisé en ce que les zones de liaison (5) sont formées en tant que zones de soudure.

7. Corps de rembourrage et / ou d'isolation selon l'une quelconque des revendications précédentes, caractérisé en ce que l'on dispose, dans les zones de liaison, des perforations qui traversent ces dernières.

8. Corps de rembourrage et / ou d'isolation selon l'une quelconque des revendications précédentes, caractérisé en ce que les couches externes se composent d'un matériau synthétique thermoplastique ou de papier ou de matériau non tissé.

9. Corps de rembourrage et / ou d'isolation selon l'une quelconque des revendications précédentes, caractérisé en ce que la taille des morceaux du matériau de remplissage (3) est comprise entre 2 et 15 cm en longueur et entre 2 et 10 mm en largeur.

10. Corps de rembourrage et / ou d'isolation selon l'une quelconque des revendications précédentes, caractérisé en ce que, dans le voisinage immédiat des zones de liaison (5), l'on place, dans leur direction d'extension, des renforcements comme par exemple des paillettes ou des copeaux / des rubans de matières synthétiques plus dures.

11. Corps de rembourrage et / ou d'isolation selon l'une quelconque des revendications précédentes, caractérisé en ce que les zones de liaison (5) sont arrangées de telle sorte qu'elles forment un motif déterminé et que le long des zones de liaison (5), l'on puisse séparer des corps (7, 8, 9, 10), dont les couches externes (1, 2) sont reliées les unes aux autres de tous les côtés aux rebords de limitation.

12. Procédé de fabrication d'un corps de rembourrage et/ou d'isolation selon l'une quelconque des revendications précédentes, caractérisé en ce que l'on introduit, entre deux couches externes (1, 2), un matériau de remplissage thermoplastique sous forme de morceaux (3), fait de déchet de feuilles d'emballage en forme de rubans et que les deux couches externes (1,2) sont reliées l'une à l'autre par des soudures appliquées de l'extérieur.

13. Procédé selon la revendication 12, caractérisé en ce que le matériau de remplissage en forme de morceaux (3) se trouvant dans la zone de liaison (5), est relié réciproquement aux deux couches externes (1, 2), grâce à des soudures.
